# EUROPEAN PATENT SPECIFICATION

(11) **EP 1 152 233 B1**
(45) Date of publication and mention of the grant of the patent: **11.04.2007**
(21) Application number: 01850078.5
(22) Date of filing: 27.04.2001
(51) Int. Cl.: G01M 13/04, G01K 3/00

(54) **Temperature monitoring device**
Vorrichtung zur Temperaturüberwachung
Dispositif de contrôle de la température

(30) Priority: 03.05.2000 SE 0001625
(43) Date of publication of application: 07.11.2001
(73) Proprietor: SKF MEKAN AB, S-641 21 Katrineholm (SE)
(72) Inventor: Östling, Sture, 641 25 Katrineholm (SE); Axelsson, Uno, 641 35 Katrineholm (SE)
(74) Representative: Westman, Per Börje Ingemar

(56) References cited:
- IT-B- 1 245 077
- US-A- 4 406 169
- DATABASE WPI Week 200049 Derwent Publications Ltd., London, GB; AN 2000-541874 XP002171303 & SE 513 279 C (SKF), 14 August 2000 (2000-08-14)

## Description

The present invention refers to a temperature monitoring device intended for continuously controlling the temperature of an object and particularly for indicating and/or recording abnormal temperature variations. Such a device can preferably be used for observing the temperature conditions of a bearing in operation, although its use is not limited to such an application.

In modern bearing technology it is a well known fact, that bearings operate best within certain temperature ranges, which might be different for different types of bearings and/or bearing applications. During operation the temperature then will vary following variations in different parameters such as load, speed and amount of lubricant. If the bearing temperature should raise above a certain level. This is an indication that there is risks that the bearing assembly is starting to break down, whereby it might cause damage to the machine equipment or other components with which it is associated.

Therefore it has earlier been developed different temperature monitoring devices, which are often rather complex and expensive, and which for instance might incorporate a bimetallic relay, and which, following a temperature increase exceeding a certain numeric value, open a valve to permit injection of a small amount of lubricant in the bearing. There are also simple, mechanical temperature monitoring devices, which e.g. uses a spring element with a shape memory effect, which visually indicates that the temperature has passed a certain critical temperature level. A great problem at such earlier known temperature monitoring devices, such as disclosed e.g. in US 4,448,147, is that it must be carefully calibrated before use, and it usually also has an ability of reacting only when a certain numerical temperature value has been exceeded, whereas it is not sensitive to temperature variations also over large ranges, as far as such ranges do not overlap the said specific temperature value.

The purpose of the present invention is to provide such a temperature monitoring device, which is very simple in design and to install and which is yet very efficient and this has been achieved in that the temperature monitoring device has been given the features defined in the characterizing part of the accompanying claim 1.

Hereinafter the invention will be further described with reference to a non-limiting embodiment, shown in the accompanying drawing.

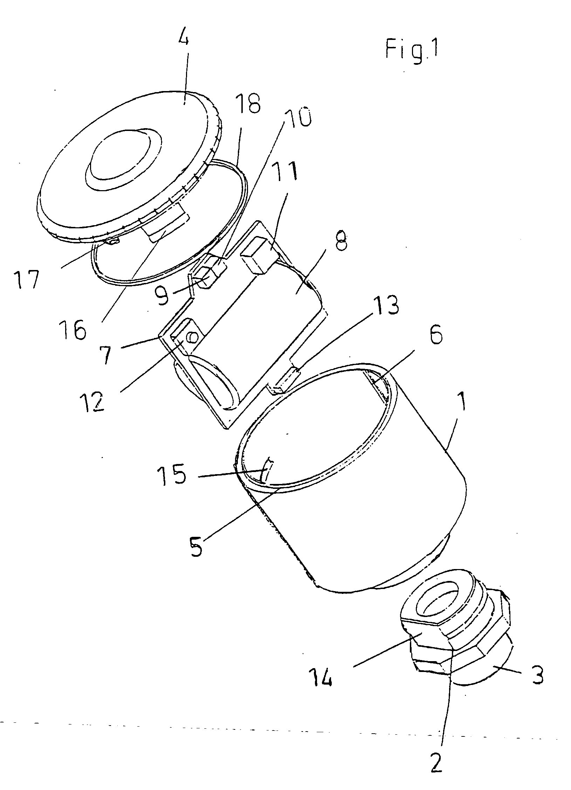

The single drawing figure, Fig. 1, shows schematically an exploded view in perspective of a device according to the invention and which comprises a rod formed housing 1 having at one axial end thereof a fitting 2 with a threaded portion 3, for attachment of the fitting and the device to a (not shown) threaded bore in the object to be supervised. The opposite axial end of the rod formed housing 1 carries a transparent cover 4, or a cover having transparent windows.

As can be seen the housing 1 is a substantially cylindrical tube, having at one axial end a socket 5 intended for receiving the cover 4. In the inner envelope surface of the housing there are provided two diametrically opposed longitudinal grooves 6 extending through the interior of the housing. In the tubular interior of the housing is insertable a frame 7, with its side edges guided in the grooves 6 in the housing. This frame supports a battery 8, two light emitting diodes 9, 10, a processor 11, a switch member 12 and a thermistor 13, in the embodiment shown formed as a limb projecting from the frame 7 itself. When the frame 7 is fully inserted in the housing 1, the light emitting diodes 9, 10 are positioned just inside the cover 4, thus that they can be seen from the outside through the transparent cover or the transparent windows therein. In this position the frame 7 with battery 8, processor 11, switch member 12 and thermistor 13 will be situated inside the housing 1, thereby being protected by the goods of the housing.

The fitting 2 has a bar shaped portion 14 extending axially in a direction away from the threaded portion 3 of the fitting. This bar shaped portion 14 has a non-round shape, and is arranged to be received in a correspondingly non-round cavity in the end of the housing 1.
In the interior of the housing 1 is further provided two diametrically opposed short circumferential grooves 15 (only one of which is visible in the drawing), and in the embodiment shown positioned displaced about 90° in relation to the internal grooves 6 in the housing.

When the device thus described is mounted, the frame 7, with its battery 8, LEDs 9, 10, processor 11 and switch member 12 is pushed into the housing 1, with its edges received in and guided by the internal, longitudinally extending grooves 6 of the housing. The LEDs 9, 10, as earlier mentioned in this mounted position are located inside the transparent portion or windows of the cover 4. When the frame 7 is in its completely inserted position in the housing 1, the thermistor 13 is in heat transferring engagement with the bar shaped portion 14 in the fitting 2.

At its side facing the housing 1, the cover 4 is provided with axially extending shoulders 16, only one of which is visible in the drawing. These shoulders are arranged to be guided in the grooves 15 in the interior of the housing, thus that the cover 4, when in position, can be rotated a short distance. The cover has also an internal knob 17 extending axially, and positioned thus that it at one rotational position of the cover 4 is pressing the switch 12 on the frame, thereby connecting the thermistor, processor and LEDs with the battery 8 for energizing these current consumers, whereas it in the other rotational position of the cover is out of contact with the switch 12. The rotational movement of the cover required for turning on and turning off the device can be e.g. 90° or less. An O-ring seal 18 is positioned between the housing 1 and the cover 4 for protecting the interior of the housing from moisture and dirt.

After being turned on the battery 8 then will continue to deliver drive current to the consumers as long as the switch is kept in this position. However, the switch is biased by spring load or the like to be in closed position, and it therefore will switch off the current supply to the consumers, if the cover 4 is now turned in opposite direction thus that the knob 17 on the cover is moved away from the switch 12.

Thus it is possible to switch on and switch off the device simply by rotating the cover, substantially any number of times.

The function of the device shall now be further described. The fitting 2 of the device as shown in operation shall be fitted to an object, the temperature of which shall be monitored, i.e. a bearing housing, whereby the threaded portion 3 of the fitting is screwed into a threaded bore in the object, thus that the fitting is in heat conducting contact with the object. When the monitoring work shall begin, as stated above the cover 4 is turned 90° e.g. in clockwise direction, whereby the cover at the end of this rotation rotation will press with its knob 17 on the switch 12, and the consumers are energized.

The current supply from the battery 8 is now open and causes the thermistor to begin metering the temperature of the bar shaped portion 14. The processor causes the LEDs to flash to show that the device is active. This can for instance be shown as two short flashes of the green LED followed by one short flash of red light.

The thermistor now starts to meter the temperature, and this can be shown in that the green light is flashing e.g. one time per 60 seconds.

The temperature in the object is now sensed over an extended period of time, e.g. two hours, when the object is supposed to have reached its steady-state temperature, whereupon the processor records the current temperature of the object.

The processor thereby causes the green LED to begin flashing, e.g. one flash each 30 seconds. This is the normal operating condition for the device, and this condition is maintained as long as the temperature of the object remains within a specified range from the temperature recorded as the normal condition temperature.

If however the temperature should raise, e.g. 10°C above this normal condition temperature, the processor causes the red LED to start flashing, say e.g. three times for every 30 seconds, thus marking an error condition.

An operator then controls the cause of the error condition and makes the necessary steps for removing the error. When this is done successfully and the temperature again drops to the normal condition the red LED is turned off and the green LED resumes its flashing once each 30 seconds, thereby indicating a normal temperature condition for the object monitored.

If the normal operation temperature for the object for some reason is increased, e.g. by exchanging components incorporated in the object, such as bearings or the like, the cover 1 is rotated in the opposite direction, whereby the cover knob 17 will move away from the switch 12, thus that the power supply from the battery 8 to the consumers will be interrupted, thus causing the temperature monitoring device to become inactive.

After a rest period, e.g. 30 minutes, the cover 4 is again turned clockwise whereupon the same procedure as described above is resumed. However, after the first "normalizing" time period of e.g. two hours, the device starts to function in normal state, but at a higher basic temperature.

In this manner it is possible to use the same or exactly similar devices in accordance with the invention for objects where changing normal temperature conditions occur, and also for applications having rather different basic normal temperature ranges, as the device does not in fact control if the object monitored exceeds a certain numeral temperature value, but instead controls and indicates if the object undergoes a temperature increase from an arbitrary temperature level exceeding a certain temperature range, e.g. 10°C.

The fitting 2 with its threaded portion 3 and its rod shaped portion 14 are preferably made from brass or another appropriate material having good temperature conducting properties, whereas the frame 7 and the housing 1 can be manufactured from any material being sufficiently robust to withstand rough handling in use. Such material can be plastic materials, such as polycarbonate.

Although the invention has been illustrated and described with reference to a specific and detailed embodiment, it is evident that the invention is not limited thereto but modifications and variants are possible within the scope of the appended claims.

## Claims

1. A temperature monitoring device for continuously controlling the temperature of an object and particularly for indicating and/or recording abnormal temperature variations,
**characterized** therein,
that the device incorporates a housing (1) in which is provided means (2) in heat transferring contact with the object to be controlled,
a sensing member (13) positioned in a position in which it is heat transferring contact with said means (2), said sensing member (13) being arranged to emit signals representative of the current temperature of the object,
a control device (11) connected to said sensing member (13) for receiving signals from the sensing member (13), and being arranged to emit signals to
indicating means (9, 10), indicating conditions in accordance with signals from the control device (11),
means (8) for supply of power to control device (11), sensing member (13) and indicating means (9, 10), and
switch means (12) biased to a first condition interrupting power supply from the means (8) for power supply to control device (11), sensing member (13) and indicating means (9, 10), a portion (17) of the housing being movable between a first position in which the switch means (12) is unaffected and biased to said first condition, and a second position in which the said housing portion (17) contacts the switch means for balancing the biasing effect, causing the means (8) for power supply to energize control device (11), sensing member (13) and indicating means (9, 10).

2. A device as claimed in claim 1,
characterized therein,
that the sensing member (13) and the switch means (12) are both rigidly interconnected

3. A device as claimed in claim 1,
**characterized** therein,
that a common frame (7) is provided for carrying sensing member (13), control device (11), indicating means (9, 10), means (8) for supply of power, and switch means (12).

4. A device as claimed in claim 3,
**characterized** therein,
that the common frame (7) is enclosed in the housing (1), which is formed as an elongated tube, at one axial end being connected to the means (2) in heat transferring contact with the object to be controlled, the frame (7) carrying said indicating means (9, 10) in a position coinciding with at least one transparent portion (4) of the housing (1).

5. A device as claimed in anyone of the preceding claims,
**characterized** therein,
that the housing portion (17), which is arranged to affect the switch means (12), is a part of lid member (4) being at least partly transparent and being arranged to close an opening in the housing remote from the means (2) in heat transferring contact with the object to be controlled, said lid member (4) in its position closing the opening being rotatable between a first position and a second position, the lid member being provided with a means balancing the biasing effect of the switch means (2) when the lid member is in its second rotational position in the housing opening.

6. A device as claimed in anyone of the preceding claims,
**characterized** therein,
that the control device (11) is arranged to emit a signal for activating the indicating means (9, 10), when the monitoring period is started following axial movement of the sensing member (13) to its first position and the switch member (12) to its energizing second position.

7. A device as claimed in claim 6,
characterized therein,
that the control device (11) has a delay function allowing an self-adjustment of a basic, normal temperature level during an extended period of time, and being arranged thereupon to emit to said indicating device a second signal, causing the indicating means to indicate a steady state temperature condition, and which control device (11) is arranged after a possible temperature raise at the object to be controlled, which raise exceeds a certain level above said steady state temperature level, to emit a third signal making the indicating means (9, 10) indicate an abnormal temperature increase.

8. A device as claimed in claim 9,
**characterized** therein,
that the control device (11) is a processor being programmed to emit the said second signal after a time delay and to emit said third signal after a temperature raise exceeding a predetermined temperature range.

9. A device as claimed in anyone of the preceeding claims,
**characterized** therein,
that the indicating means (9, 10) are light emitting diodes, preferably having two different colours, e.g. red and green.

10. A device as claimed in anyone of the preceeding claims,
**characterized** therein,
that the means for power supply is a battery (8) provided on the frame (7) and being connectable over the switch member (12) to the sensing member (13), the control device (11) and the indicating means (9, 10) via conduits printed on the frame (7).

11. A device as claimed in anyone of the preceeding claims,
**characterized** therein,
that the sensing member (13) is a thermistor.

## Patentansprüche

1. Vorrichtung zur Temperaturüberwachung zum kontinuierlichen Kontrollieren der Temperatur eines Objektes und insbesondere zum Anzeigen und/oder Aufzeichnen abnormaler Temperaturänderungen, **dadurch gekennzeichnet, dass** die Vorrichtung ein Gehäuse (1) umfasst, in welchem Mittel (2) vorgesehen sind, die in Wärme übertragendem Kontakt mit dem zu kontrollierenden Objekt stehen, ein Sensorelement (13) an einer Stelle positioniert ist, an welcher es in Wärme übertragendem Kontakt mit den Mitteln (2) steht, wobei das Sensorelement (13) zur Ausgabe von Signalen vorgesehen ist, die repräsentativ für die momentane Temperatur des Objektes sind, eine Steuervorrichtung (11) mit dem Sensorelement (13) verbunden ist, um Signale von dem Sensorelement (13) zu empfangen, wobei sie dazu vorgesehen ist, Signale an Anzeigemittel (9, 10) auszugeben, die Zustände im Einklang mit den Signalen der Steuervorrichtung (11) anzeigt, Mittel zur Stromversorgung der Steuervorrichtung (11), des Sensorelements (13) und der Anzeigemittel (9, 10) vorgesehen sind und Schaltmittel (12) in einem ersten Zustand vorbelastet sind, der die Stromversorgung von den Mitteln (8) zur Stromversorgung zu der Steuervorrichtung (11), dem Sensorelement (13) und den Anzeigemitteln (9, 10) unterbricht, wobei ein Teil (17) des Gehäuses zwischen einer ersten Stellung, in welcher die Schaltmittel (12) unbeeinflusst in ihrem ersten Zustand vorbelastet sind, und einer zweiten Stellung beweglich ist, in welcher der Teil (17) des Gehäuses die Schaltmittel zum Aufheben der Vorbelastungswirkung kontaktiert und die Mittel (8) zur Stromversorgung dazu bringt, die Steuervorrichtung (11), das Sensorelement (13) und die Anzeigemittel (9, 10) mit Energie zu versorgen.

2. Vorrichtung nach Anspruch 1, **dadurch gekennzeichnet, dass** das Sensorelement (13) und die Schaltmittel (12) fest miteinander verbunden sind.

3. Vorrichtung nach Anspruch 1, **dadurch gekennzeichnet, dass** ein gemeinsamer Rahmen (7) vorgesehen ist, um das Sensorelement (13), die Steuervorrichtung (11), die Anzeigemittel (9, 10), die Mittel (8) zur Stromversorgung und die Schaltmittel (12) zu halten.

4. Vorrichtung nach Anspruch 3, **dadurch gekennzeichnet, dass** der gemeinsame Rahmen (7) in dem Gehäuse (1) eingeschlossen ist, das als eine längliche Röhre ausgebildet ist, die an einem axialen Ende mit den Mitteln (2) in Wärme übertragendem Kontakt mit dem zu kontrollierenden Objekt verbunden ist, wobei der Rahmen (7) die Anzeigemittel (9, 10) an einer Stelle trägt, die mit wenigstens einem transparenten Bereich (4) des Gehäuses (1) zusammenfällt.

5. Vorrichtung nach einem der vorhergehenden Ansprüche, **dadurch gekennzeichnet, dass** der Teil (17) des Gehäuses, der zur Beeinflussung der Schaltmittel (12) vorgesehen ist, ein Teil eines Deckelelements (4) ist, das wenigstens teilweise transparent ist und zum Verschließen einer Öffnung in dem Gehäuse entfernt von den Mitteln (2) in Wärme übertragendem Kontakt mit dem zu kontrollierenden Objekt vorgesehen ist, wobei das Deckelelement (4) in seiner die Öffnung verschließenden Stellung zwischen einer ersten Stellung und einer zweiten Stellung drehbar ist und mit Mitteln versehen ist, die die Vorbelastungswirkung der Schaltmittel (2) aufheben, wenn sich das Deckelelement in seiner zweiten Drehstellung in der Gehäuseöffnung befindet.

6. Vorrichtung nach einem der vorhergehenden Ansprüche, **dadurch gekennzeichnet, dass** die Steuervorrichtung (11) dazu vorgesehen ist, ein Signal zum Aktivieren der Anzeigemittel (9, 10) auszugeben, wenn die Überwachungsperiode folgend einer Axialbewegung des Sensorelements (13) zu seiner ersten Stellung und des Schaltelements (12) zu seiner energieversorgenden zweiten Stellung gestartet wird.

7. Vorrichtung nach Anspruch 6, **dadurch gekennzeichnet, dass** die Steuerungsvorrichtung eine Verzögerungsfunktion besitzt, die eine Selbsteinstellung eines grundlegenden, normalen Temperaturniveaus während einer erweiterten Zeitdauer erlaubt und so ausgebildet ist, dass sie daraufhin an die Anzeigevorrichtung ein zweites Signal ausgibt, das die Anzeigemittel dazu bringt, einen dauerhaften Temperaturzustand anzuzeigen, wobei die Steuervorrichtung (11) dazu vorgesehen ist, nach einem möglichen Temperaturanstieg an dem zu kontrollierenden Objekt, der ein bestimmtes Niveau oberhalb des dauerhaften Temperaturniveauzustandes übersteigt, ein drittes Signal auszugeben, das die Anzeigemittel (9, 10) dazu bringt, einen abnormalen Temperaturanstieg anzuzeigen.

8. Vorrichtung nach Anspruch 9, **dadurch gekennzeichnet, dass** die Steuervorrichtung (11) ein Prozessor ist, der derart programmiert ist, dass er das zweite Signal nach einer Zeitverzögerung ausgibt und das dritte Signal nach einem Temperaturanstieg ausgibt, der einen vorbestimmten Temperaturbereich übersteigt.

9. Vorrichtung nach einem der vorhergehenden Ansprüche, **dadurch gekennzeichnet, dass** die Anzeigemittel (9, 10) Leuchtdioden sind, die vorzugsweise zwei unterschiedliche Farben haben, beispielsweise Rot und Grün.

10. Vorrichtung nach einem der vorhergehenden Ansprüche, **dadurch gekennzeichnet, dass** die Mittel zur Stromversorgung eine Batterie (8) sind, die an dem Rahmen (7) vorgesehen ist und über das Schaltelement (12) mit dem Sensorelement (13) der Steuervorrichtung (11) und den Anzeigemitteln (9, 20) über auf dem Rahmen (7) aufgedruckte Leiter verbindbar ist.

11. Vorrichtung nach einem der vorhergehenden Ansprüche, **dadurch gekennzeichnet, dass** das Sensorelement (13) ein Thermistor ist.

## Revendications

1. Dispositif de contrôle de température pour contrôler en continu la température d'un objet et en particulier pour indiquer et/ou enregistrer des variations anormales de température,
**caractérisé en ce que**
le dispositif comporte un boîtier (1) dans lequel est placé un moyen (2) en contact de transfert thermique avec l'objet à contrôler,
un élément de mesure (13) positionné dans une position dans laquelle il est en contact de transfert thermique avec ledit moyen (2), ledit élément de mesure (13) étant adapté pour émettre des signaux représentatifs de la température courante de l'objet,
un dispositif de commande (11) connecté audit élément de mesure (13) pour recevoir des signaux de l'élément de mesure (13), et adapté pour émettre des signaux vers des moyens d'indication (9, 10), indiquant les conditions selon les signaux provenant du dispositif de commande (11),
un moyen (8) pour fournir de l'énergie au dispositif de commande (11), à l'élément de mesure (13) et aux moyens d'indication (9, 10), et
un moyen de commutation (12) sollicité dans une première condition qui interrompt l'alimentation du moyen (8) pour alimenter le dispositif de commande (11), l'élément de mesure (13) et les moyens d'indication (9, 10), une partie (17) du boîtier étant mobile entre une première position dans laquelle le moyen de commutation (12) n'est pas affecté et sollicité dans ladite première condition, et une deuxième position dans laquelle ladite partie de boîtier (17) touche le moyen de commutation pour contrebalancer l'effet de sollicitation, obligeant le moyen d'alimentation (8) à alimenter le dispositif de commande (11), l'élément de mesure (13) et les moyens d'indication (9, 10).

2. Dispositif selon la revendication 1, **caractérisé en ce que** l'élément de mesure (13) et le moyen de commutation (12) sont tous deux interconnectés de manière rigide.

3. Dispositif selon la revendication 1, **caractérisé en ce qu'**un cadre commun (7) est prévu pour porter l'élément de mesure (13), le dispositif de commande (11), les moyens d'indication (9, 10), le moyen (8) d'alimentation et le moyen de commutation (12).

4. Dispositif selon la revendication 3, **caractérisé en ce que** le cadre commun (7) est enfermé dans le boîtier (1), qui se présente sous la forme d'un tube allongé, à une extrémité axiale étant assemblé au moyen (2) en contact de transfert thermique avec l'objet à contrôler, le cadre (7) portant lesdits moyens d'indication (9, 10) dans une position qui coïncide avec au moins une partie transparente (4) du boîtier (1).

5. Dispositif selon l'une quelconque des revendications précédentes, **caractérisé en ce que** la partie de boîtier (17), qui est adapté pour affecter le moyen de commutation (12), fait partie d'un élément formant couvercle (4) qui est au moins partiellement transparent et qui est agencé pour fermer une ouverture pratiquée dans le boîtier à distance du moyen (2) en contact de transfert thermique avec l'objet à contrôler, ledit élément formant couvercle (4), dans sa position qui ferme l'ouverture, pouvant tourner entre une première position et une deuxième position, l'élément formant couvercle étant pourvu d'un moyen qui contrebalance l'effet de sollicitation du moyen de commutation (2) lorsque l'élément formant couvercle est dans sa deuxième position de rotation dans l'ouverture du boîtier.

6. Dispositif selon l'une quelconque des revendications précédentes, **caractérisé en ce que** le dispositif de commande (11) est adapté pour émettre un signal servant à activer les moyens d'indication (9, 10), lorsque la période de contrôle commence suite au mouvement axial de l'élément de mesure (13) vers sa première position et de l'élément de commutation (12) vers sa deuxième position, ou position d'alimentation.

7. Dispositif selon la revendication 6, **caractérisé en ce que** le dispositif de commande (11) a une fonction de retard qui permet l'auto-ajustement d'un niveau de température normal de base pendant un intervalle de temps prolongé, et étant adapté pour émettre ensuite un deuxième signal à destination dudit dispositif d'indication, obligeant les moyens d'indication à indiquer une condition de température de régime établi, et ledit dispositif de commande (11) étant adapté après une élévation de température possible au niveau de l'objet à contrôler, ladite élévation dépassant un certain niveau au-dessus dudit niveau de température de régime établi, pour émettre un troisième signal qui fait indiquer par les moyens d'indication (9, 10) une augmentation anormale de la température.

8. Dispositif selon la revendication 9, **caractérisé en ce que** le dispositif de commande (11) est un processeur programmé pour émettre ledit deuxième signal après un délai et pour émettre ledit troisième signal après une élévation de température dépassant une plage de températures prédéterminée.

9. Dispositif selon l'une quelconque des revendications précédentes, **caractérisé en ce que** les moyens d'indication (9, 10) sont des diodes électroluminescentes, ayant de préférence deux couleurs différentes, par exemple le rouge et le vert.

10. Dispositif selon l'une quelconque des revendications précédentes, **caractérisé en ce que** le moyen d'alimentation est une pile (8) placée sur le cadre (7) et pouvant être connectée grâce à l'élément de commutation (12) à l'élément de mesure (13), au dispositif de commande (11) et aux moyens d'indication (9, 10) via des pistes imprimées sur le cadre (7).

11. Dispositif selon l'une quelconque des revendications précédentes, **caractérisé en ce que** l'élément de mesure (13) est une thermistance.
